(19) **Europäisches Patentamt**
**European Patent Office**
**Office européen des brevets**

(11) **EP 1 829 199 B1**

(12) **EUROPÄISCHE PATENTSCHRIFT**

(45) Veröffentlichungstag und Bekanntmachung des Hinweises auf die Patenterteilung:
**30.06.2010 Patentblatt 2010/26**

(21) Anmeldenummer: **05850275.8**

(22) Anmeldetag: **15.12.2005**

(51) Int Cl.:
**H02P 7/285** (2006.01)

(86) Internationale Anmeldenummer:
**PCT/EP2005/013486**

(87) Internationale Veröffentlichungsnummer:
**WO 2006/069635 (06.07.2006 Gazette 2006/27)**

(54) **SENSORLOSE STELLWEGMESSUNG INSBESONDERE AN EINER ELEKTROMOTORISCH BETRIEBENEN FESTSTELLBREMSE**

SENSORLESS MEASUREMENT OF POSITIONING TRAVEL ESPECIALLY ON AN ELECTROMOTIVELY OPERATED PARKING BRAKE

MESURE SANS CAPTEUR D'UNE DISTANCE PARCOURUE, NOTAMMENT AU NIVEAU D'UN FREIN DE STATIONNEMENT COMMANDE PAR UN MOTEUR ELECTRIQUE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **22.12.2004 DE 102004061917**

(43) Veröffentlichungstag der Anmeldung:
**05.09.2007 Patentblatt 2007/36**

(73) Patentinhaber: **Lucas Automotive GmbH**
**56070 Koblenz (DE)**

(72) Erfinder:
• **LINDEN, Christoph**
**56179 Vallendar (DE)**

• **KELLER, Michael**
**55595 Traisen (DE)**

(74) Vertreter: **Röthinger, Rainer**
**Wuesthoff & Wuesthoff**
**Patent- und Rechtsanwälte**
**Schweigerstrasse 2**
**81541 München (DE)**

(56) Entgegenhaltungen:
**DE-A1- 10 028 035     DE-C1- 19 729 238**
**US-A- 5 783 917**

• **PATENT ABSTRACTS OF JAPAN Bd. 2003, Nr. 11, 5. November 2003 (2003-11-05) & JP 2003 209989 A (TOSHIBA CORP), 25. Juli 2003 (2003-07-25)**

**Beschreibung**

**Gebiet der Erfindung**

Die Erfindung betrifft ein Verfahren zum Ermitteln der Position einer von einem Elektromotor betriebenen Stelleinheit. Die Erfindung betrifft ferner Bremsen, Pumpen und Getriebe, in welchen derartige Stelleinheiten zum Einsatz kommen.

**Hintergrund der Erfindung**

Derzeit wird z. B. bei einer elektronischen Parkbremse (EPB), die von einer Stelleinheit betrieben wird, die Motordrehzahl in der Regel sensorisch (etwa mittels eines Hall-Sensors) gemessen. Die Anzahl der erfassten Umdrehungen (bzw. der vom HallSensor gelieferten Impulse) multipliziert mit einer Motorkonstanten ergibt den von der Stelleinheit zurückgelegten Weg. Durch den Einbau eines Halloder eines anderweitigen Sensors entstehen jedoch hohe Kosten.

Ansätze zur sensorlosen Ermittlung einer Motordrehzahl, z.B. aus der Anzahl der Kommutierungswechsel, sind bereits bekannt. Allerdings haben diese den Nachteil der Störanfälligkeit. Das Patent DE 197 29 238 C1 beschreibt beispielsweise ein Verfahren zum Ermitteln der Drehzahl bei mechanisch kommutierten Gleichstrommotoren, bei dem die Drehzahlermittlung aus einem Motorzustandsmodell parallel zur Erfassung der Welligkeit (Stromrippel) des Motorstroms läuft. Aus dem Motorzustandsmodell, dem die elektromechanischen Motorgleichungen zugrunde liegen, wird zunächst die Drehzahl ermittelt und dann ein zulässiger Soll-Zeitbereich für den folgenden Kommutierungsvorgang vorgegeben. Wenn aufgrund einer Störung keine Welligkeit innerhalb dieses Soll-Zeitbereichs detektiert wird, wird die wahrscheinliche Drehzahl und der daraus abgeleitete wahrscheinliche Kommutierungszeitpunkt angenommen.

Die Druckschrift DE 100 280 35 A1 offenbart ein Verfahren zur Positionsbestimmung eines Elektromotorankers, bei dem in dem Zeitraum zwischen dem Abschalten und dem Stillstand des Elektromotors Stromrippel in dem Ankerstromsignal erfasst und abgeschätzt werden.

Die Druckschrift US 5,783,917 betrifft ein Verfahren und eine Vorrichtung zum Betreiben einen bürstenlosen Dreiphasen-Elektromotors. Zur Bestimmung der Rotor-Drehwinkelposition des Motors werden Stromrippel auch nach einem Abschalten der Spuleansteuerung des Motors erfasst.

Die Druckschrift JP 2003 209989 betrifft eine Bestimmung einer Rotor-Drehwinkelposition eine Motors mit Hilfe eines Motormodels.

Es ist Aufgabe der vorliegenden Erfindung, den Weg einer Stelleinheit ohne Einsatz zusätzlicher Sensorik präzise zu ermitteln. Eine weitere Aufgabe der vorliegenden Erfindung ist es, den Weg der Stelleinheit fortlaufend oder in kurzen Zeitabständen schnell bestimmen zu können.

**Kurzer Abriss der Erfindung**

Die oben genannten Aufgaben werden gelöst von einem erfindungsgemäßen Verfahren zum Ermitteln einer Position einer von einem Elektromotor betriebenen Stelleinheit, umfassend die Schritte des Bestimmens einer Motordrehzahl aus einem Motormodell, der Integration der Motordrehzahl über einen Zeitraum und des Bestimmens der Position der Stelleinheit durch Multiplikation des Ergebnisses der Integration mit einem Proportionalitätsfaktor, wobei das Motormodell ein Nachlaufen des Elektromotors berücksichtigt, indem zum Abschaltzeitpunkt des Elektromotors die im Elektromotor induzierte Spannung als speisende Spannung dem Motormodell zugeführt wird. Mittels Integration kann aus der Motordrehzahl, die mit einem Proportionalitätsfaktor multipliziert wird, der von der Stelleinheit zurückgelegte Weg berechnet werden.

Ein Gedanke des in der Erfindung vorgestellten Verfahrens ist ein Streckenmodell, dem vorzugsweise ohnehin gemessene Betriebsdaten zugeführt werden, mit denen aus einem Motormodell eine Motordrehzahl errechnet wird. Gemessene Betriebsdaten sind die an den Motorklemmen angelegte Betriebsspannung $U_q$ und der in den Leitungen gemessene Strom $I_{mess}$. Es können auch weitere Betriebsdaten dem Motormodell zugeführt werden.

In einem Ausführungsbeispiel berücksichtigt das Motormodell zum Abschaltzeitpunkt ein auf den Elektromotor wirkendes belastendes Moment. In einem Ausführungsbeispiel berücksichtigt das Motormodell zusätzlich oder alternativ hierzu eine zur Drehgeschwindigkeit proportionale Dämpfung.

In einem weiteren Ausführungsbeispiel wird die geschwindigkeitsproportionale Dämpfung als ein Dämpfungsdrehmoment in das Motormodell aufgenommen, wobei das Dämpfungsdrehmoment gleich einer Dämpfungskonstante multipliziert mit einer Winkelgeschwindigkeit des Elektromotors ist. Bei einer Weiterbildung der Erfindung ist die Dämpfungskonstante gleich einem Leerlaufreibmoment dividiert durch eine Leerlaufwinkelgeschwindigkeit des Motors. Andere Ansätze zur Ermittlung der geschwindigkeitsproportionalen Dämpfung sind jedoch ebenfalls denkbar. In einem weiteren Ausführungsbeispiel, das mit den obigen kombinierbar ist, berücksichtigt das Motormodell zusätzlich ein belastendes Moment, indem bevorzugt das Moment aus einem gemessenen Motorstrom bestimmt wird, wobei ein Wirkungsgrad eines elektrischen Teils des Elektromotors berücksichtigt wird.

Das erfindungsgemäße Verfahren kann in Abhängigkeit von (externen oder internen) Triggersignalen durchgeführt werden. So kann das Verfahren zusätzlich den Schritt des Einschaltens eines Triggersignals als ersten Schritt umfassen, wobei der Schritt des Bestimmens der Motordrehzahl nur dann ausgeführt wird, wenn das Triggersignal eingeschaltet ist.

Auch kann das erfindungsgemäße Verfahren zusätzlich den Schritt des Ausschaltens des Triggersignals als letzten Schritt umfassen, wobei beim Ausschalten des Triggersignals das angelegte Lastmoment bestimmt wird. Das Lastmoment kann (konstant oder nur zu bestimmten Zeitpunkten) dem Modell zugeführt werden, z.B. solange die vom Modell berechnete Drehzahl größer Null ist und das angelegte Lastmoment den Wert Null annimmt, wenn die berechnete Drehzahl Null ist.

Gemäss einer Weiterbildung wird beim Ausschalten des Triggersignals dem Modell die induzierte Spannung als speisende Spannung zugeführt. In einem weiteren Ausführungsbeispiel wird ein Integrator zur Berechnung von Drehzahl und Weg zu Beginn der Berechnung bei jeder steigenden Flanke des TrIggersignals zurückgesetzt.

Das erfindungsgemäße Verfahren kann zusätzlich den Schritt des Umrechnens der Drehzahl in Umdrehungen pro Sekunde umfassen.

Ein erfindungsgemäßes Computerprogrammprodukt zum Ermitteln der Position einer von einem Elektromotor betriebenen Stelleinheit umfasst Programmcode für das Durchführen der Schritte des Bestimmens einer Motordrehzahl aus einem Motormodell und des Bestimmens des von der Stelleinheit zurückgelegten Wegs durch Integration der Motordrehzahl über einen Zeitraum und Multiplikation mit einem Proportionalitätsfaktor, wobei das Motormodell ein Nachlaufen des Elektromotors berücksichtigt, indem zum Abschaltzeitpunkt des Elektromotors die im Elektromotor induzierte Spannung als speisende Spannung dem Motormodell zugeführt wird.

Das erfindungsgemäße Verfahren ist allgemein in einer Stelleinheit und konkret beispielsweise in einer elektromechanischen Bremse (EMB), einer elektrischen Parkbremse (EPB), einer hydraulischen Parkbremse (HPB), einer Pumpeinheit eines AntiBlockiersystems (ABS) und einem Getriebe einsetzbar.

Eine erfindungsgemäße Stellvorrichtung umfasst einen Elektromotor und eine von dem Elektromotor betriebene Stelleinheit mit einer Speichereinheit für ein Motormodell und mit einem Prozessor, wobei die Speichereinheit zum Ermitteln der Position der von einem Elektromotor betriebenen Stelleinheit Programmcode zum Durchführen der Schritte des Bestimmens einer Motordrehzahl aus einem Motormodell und des Bestimmens eines von der Stelleinheit zurückgelegten Wegs durch Integration der Motordrehzahl über einen Zeitraum und Multiplikation mit einem Proportionalitätsfaktor umfasst und wobei das Motormodell ein Nachlaufen des Elektromotors berücksichtigt, indem zum Abschaltzeitpunkt des Elektromotors die im Elektromotor induzierte Spannung als speisende Spannung dem Motormodell zugeführt wird.

Eine erfindungsgemäße Bremse umfasst eine erfindungsgemäße Stellvorrichtung wie oben beschrieben, wobei die Stellvorrichtung die Bremse betätigt.

Eine erfindungsgemäße Pumpvorrichtung umfasst eine erfindungsgemäße Stellvorrichtung wie oben beschrieben, wobei die Stellvorrichtung die Pumpvorrichtung betätigt.

Ein erfindungsgemäßes Getriebe umfasst eine erfindungsgemäße Stellvorrichtung wie oben beschrieben, wobei die Stellvorrichtung das Getriebe betätigt.

**Kurze Beschreibung der Zeichnungen**

Im folgenden wird die Erfindung anhand von Zeichnungen ausführlich beschrieben werden. Es zeigt:

Fig. 1 ein Ersatzschaltbild für einen Gleichstrommotor mit einer mit dem Gleich- strommotor verbundenen Last,

Fig. 2 ein regelungstechnisches Ersatzschaltbild,

Fig. 3 ein regelungstechnisches Ersatzschaltbild mit einer geschwindigkeitsproportio- nalen Dämpfung,

Fig. 4 ein regelungstechnisches Ersatzschaltbild mit der geschwindigkeitsproportiona- len Dämpfung und einer Schätzung des Lastmoments,

Fig. 5 ein regelungstechnisches Ersatzschaltbild mit der geschwindigkeitsproportiona- len Dämpfung, der Schätzung des Lastmoments und einem Triggersignal,

Fig. 6 ein regelungstechnisches Ersatzschaltbild mit der geschwindigkeitsproportiona- len Dämpfung, der Schätzung des Lastmoments und dem Triggersignal, wobei das Lastmoment zum Abschaltzeitpunkt des Motors geschätzt wird,

Fig. 7    ein regelungstechnisches Ersatzschaltbild mit der geschwindigkeitsproportiona- len Dämpfung, der Schätzung des Lastmoments und dem Triggersignal, wobei das Lastmoment zum Abschaltzeitpunkt des Motors geschätzt wird und die Spannungsverhältnisses am Motor beim Abschalten berücksichtigt werden,

Fig. 8    ein regelungstechnisches Ersatzschaltbild mit der geschwindigkeitsproportiona- len Dämpfung, der Schätzung des Lastmoments und dem Triggersignal, wobei das Lastmoment zum Abschaltzeitpunkt des Motors geschätzt wird, die Span- nungsverhältnisses am Motor beim Abschalten berücksichtigt werden und ein Integrator zur Berechnung von Drehzahl und Weg vorgesehen ist,

Fig. 9    eine schematische Darstellung einer Stellvorrichtung mit einem Elektromotor, einer Stelleinheit, einem Prozessor und einer Speichereinheit.

**Ausführliche Beschreibung bevorzugter Ausführungsbeispiele**

Für die Ermittlung eines Motormodells für einen mit einem Permanentmagnet erregten Gleichstrommotor kann allgemein vom Ersatzschaltbild des fremderregten Gleichstrommotors ausgegangen werden.
Die folgenden Variablen werden im Weiteren verwendet:

$U_q$        angelegte Betriebsspannung (Klemmspannung)
$U_o$        Induktionsspannung im Motor aufgrund der Drehbewegung
$R_i$        Ankerwiderstand
$L_a$        Ankerspuleninduktivität
$I_q$        Ankerstrom
$I_{mess}$        Gemessener Motrostrom
$\Psi_d$        magnetischer Fluss
$k_m$        Motorkonstante (wird vom Hersteller angegeben, Einheit: Nm/A)
s        Laplace-Variable
$\omega$        Winkelgeschwindigkeit des Motors (Kreisfrequenz)
J        Trägheitsmoment an der Motorwelle
$M_{el}$        Elektrisch erzeugtes Antriebsmoment
$M_L$        Lastmoment an der Motorwelle
$M_T$        Beschleunigungsmement
$M_d$        Dämpfungsmoment
C        Proportionalitätskonstante
$T_a$        Ankerzeitkonstante
$M_{fr\infty}$        Leerlaufreibmoment (Einheit: A)
$I_\infty$        Leerlaufstrom (Einheit: A)
$\Omega_\infty$        Leeraufwinkelgeschwindigkeit (Einheit: rad/s)
b        Dämpfungskonstante (Einheit: Nm sec rad)
$\eta$        Wirkungsgrad

Eine in einem Anker eines Elektromotors induzierte Spannung errechnet sich allgemein zu:

$$U_0(s) = c \cdot \psi_d \cdot \omega(s) \qquad \text{(Gl. 1.0)}$$

Dabei ist s die Laplace-Variable, mit Hilfe derer die auftretenden Differentialgleichungen, wie in der Regelungstechnik üblich, geschrieben werden. Die Proportionalitätskonstante c wird als Maschinenkonstante bezeichnet, die unter Anderem von den geometrischen Abemssungen der Motorwicklungen abhängt.
Daraus folgt für den Spannungsumlauf in einem Ankerkreis eines Elektromotor:

$$U_q(s) = I_q(s) \cdot (R_i + s \cdot L_a) + U_0(s) \qquad \text{(Gl. 1.1)}$$

Für die Ankerzeitkonstante $T_a$ gilt:

$$T_a = \frac{L_a}{R_i}$$

(Gl. 1.2)

Durch Umstellen der Gl. 1.1 und Verwenden von Gl. 1.2 gelangt man zu:

$$I_q(s) = \frac{(U_q(s) - U_0(s))}{R_i} \cdot \frac{1}{1 + s \cdot T_a}$$

(Gl. 1.3)

Mit der allgemeinen Motorkonstanten $k_m$ mit

$$k_m = c \cdot \psi_d$$

(Gl. 1.4)

die aus einem vom Motorhersteller mitgelieferten Motordatenblatt entnehmbar ist, kann das elektrisch erzeugbare Moment $M_{el}$ berechnet werden:

$$M_{el} = k_m \cdot I_q(s)$$

(Gl 1.5)

Das erzeugte elektrische Antriebsmoment $M_{el}$ steht im Gleichgewicht mit dem Lastmoment $M_L$. Und dem zur Beschleunigung oder Verzögerung der Massenträgheiten notwendigen Moment $M_T$. Das zur Beschleunigung oder Verzögerung notwendige Moment $M_T$ berechnet sich unter Verwendung der Laplace-Transformation zu:

$$M_T(s) = J \cdot s \cdot \omega(s)$$

(Gl. 1.6)

Als Momentengleichgewicht ausgedrückt:

$$M_T(s) = M_{el}(s) - M_L(s)$$

(Gl. 1.7)

Die Gleichungen 1.1 bis 1.7 stellen das Grundmodell für den Gleichstrommotor dar. Das Motormodell bildet das Systemverhalten sowohl dynamisch als auch statisch ab. Um ein verwendbares Modell für eine Wegschätzung zu erhalten wird das Grundmodell wie folgt erweitert.
Zunächst wird das Motormodell des Gleichstrommotors um eine geschwindigkeitsproportionale Dämpfung erweitert. Das Nach- oder Auslaufverhalten des Motors beim Abschalten kann zusätzlich berücksichtigt werden.
Das bei Leerlaufdrehzahl auftretende Reibmoment $M_{fr\infty}$ wird durch Lager und Bürstenreibung sowie durch mechanische und elektrische Verluste im Luftspalt bzw. Eisen des Rotors verursacht. Lager und Bürstenreibung können als Coulombsche, die Verluste im Luftspalt und im Eisen als viskose Reibung modelliert werden. Das Reibmoment ist die Summe aus beiden Anteilen. Es ergibt sich mit der Motorkonstanten aus dem Leerlaufstrom. Um ein lineares Modell zu erhalten, wird die gesamte Reibung als geschwindigkeitsproportional angenommen. Die zugehörige Dämpfungskonstante berechnet sich aus den Datenblattangaben des Motorherstellers.

$$b = \frac{M_{fr\infty}}{\Omega_\infty} = \frac{k_m \cdot I_\infty}{\Omega_\infty} \qquad \text{(Gl. 1.8)}$$

Wie angegeben ist diese Dämpfung geschwindigkeitsproportional. Für das Modell bedeutet dies, dass ein weiterer Term im Momentengleichgewicht (Gl 1.7) berücksichtigt werden muss. Daraus folgt:

$$M_d(s) = b * \omega(s) \qquad \text{(Gl. 1.9)}$$

$$M_T(s) = M_{el}(s) - M_L(s) - M_d(s) \qquad \text{(Gl. 1.10)}$$

Gemäß einem Ausführungsbeispiel wird das Motormodell zusätzlich so erweitert, dass das belastende Motormoment berücksichtigt wird. Hierbei ist es gleichgültig, woraus das Lastmoment resultiert. Ändert sich z.B. die interne Reibung der Konstruktion, so ändert sich der Motorstrom direkt proportional dazu. Auf diese Weise ist es möglich, mittels des Motorstroms das Lastmoment über die Motorkonstante zu berechnen (die Motorkonstante wird üblicherweise vom Motorhersteller angegeben).

Der gemessene Motorstrom ist proportional zur Last. Hierbei ist es gleichgültig, woraus das Lastmoment resultiert. Ändert sich z.B. die interne Reibung der Konstruktion, ändert sich der Motorstrom direkt proportional dazu. Wenn die Reibung steigt, steigt der Strom. Wenn die Reibung abnimmt, nimmt der Strom ab. Gleiches gilt für eine Laständerung an der antreibenden Motorwelle. Allerdings muss der Wirkungsgrad des elektrischen Teil des Motors berücksichtigt werden. Der Wirkungsgrad kann messtechnisch ermittelt werden. Mit diesen Zusammenhängen ist es möglich mittels des Motorstroms das Lastmoment über die Motorkonstante $k_m$ zu berechnen.

Um ein lauffähiges reales Motormodell zu erhalten darf die Klemmspannung Uq und der Strom $I_{mess}$ nur dann auf das Modell geschaltet werden, wenn der Motor in der Applikation auch wirklich angesteuert wird. Andernfalls kann das reale Verhalten speziell beim Einschalten nicht fehlerfrei berechnet werden.

In einem weiteren Ausführungsbeispiel ist ein Triggersignal vorgesehen.

Durch Einschalten des Motors mit dem Triggersignal wird zunächst die gemessene Batteriespannung und der tatsächlich fließende Strom auf das Modell geschaltet. Solange das Triggersignal Null ist, sind Lastmoment und Betriebsspannung für das Modell Null.

Um das Ausschalten des Motors realistisch zu gestalten, muss das Modell erweitert werden. Da zum Abschaltzeitpunkt der Motor bedingt durch die vorhandenen Massenträgheiten von Last, Anker, Welle und aller weiteren angetriebenen Komponenten noch nachläuft, kann eine Lösung erarbeitet werden, die dieses "Nachdrehverhalten" optimal abbildet. Da das Modell das angelegte Lastmoment mit Hilfe des fließenden Stromes berechnet, hat man zum Abschaltzeitpunkt eine Information über die momentane Belastung. Dieser Wert wird in einer Speicherzelle gehalten und am und/oder nach dem Abschaltzeitpunkt (Triggersignal = 0) konstant dem Modell zugeführt, solange die vom Modell berechnete Drehzahl ω > 0. Bei Erreichen der simulierten Drehzahl 0 wird das aus dem Laststrom berechnete Lastmoment im Modell verarbeitet. Durch diese Maßnahme wird erreicht, dass das zwischengespeicherte Lastmoment den Wert 0 annimmt, wenn der Motor endgültig steht (ω = 0). Würde dem Modell dann immer noch ein Lastmoment zugeführt, wäre das Momentengleichgewicht am Summationspunkt des Modells gestört und das Modell würde bei stehendem Motor falsche Ausgangswerte berechnen. Wird der Motor angeschaltet (Triggersignal = 1), stellt sich über den Laststrom sofort wieder das momentan aktuell vorhandene Lastmoment ein und das Modell kann fehlerfrei anlaufen.

Mit den eingeführten Modellerweiterungen ist das Modell jedoch noch immer nicht gänzlich exakt im Auslaufverhalten beim Abschalten des Motors unter Last. Da zum Abschaltzeitpunkt (U$_q$ = 0) an den Anschlussklemmen des Motors keine Spannung mehr anliegt und die Motorklemmen offen sind, wird das Nachdrehen des Motors nur noch durch die mechanischen Komponenten bestimmt. Im Modell wird aber solange sich der Motor noch dreht die induzierte Spannung berücksichtigt. Diese hat jedoch bei offenen Motorklemmen keine Bedeutung mehr. Damit das Auslaufverhalten richtig abgebildet wird, kann deshalb zum Abschaltzeitpunkt die induzierte Spannung als speisende Spannung U$_q$ dem Modell zugeführt werden. Hierdurch ergibt sich für U$_q$ - U$_o$ = 0. Aus dieser Gleichung ergibt sich für den elektrischen Teil des Modells 0 und es ist nur noch der mechanische Anteil des Modells wirksam.

Der Gleichstrommotor wird als Übertragungsfunktion des Ankerkreises und die Darstellung der mechanischen Differentialgleichung abgebildet. Durch Einschaltung des Motors mit dem Triggersignal wird zunächst die gemessene Batteriespannung und der tatsächlich fließende Strom auf das Modell geschaltet. Solange das Triggersignal 0 ist, sind Lastmoment und die Betriebsspannung auf das Modell geschaltet. Das ist wichtig, denn andernfalls würde das Modell schon eine Drehzahl berechnen und das Gesamtergebnis verfälschen.

Die Spannung gelangt im Einschaltmoment über einen Auswahlschalter auf die Summation vor dem Ankerkreis. An diesem Punkt wird die sich aufgrund der Drehzahl einstellende induzierte Motorspannung von der Betriebsspannung abgezogen. Die so berechnete Spannung ist die alleinige treibende Spannung am Ankerkreis. Der Anker besteht im Wesentlichen aus der Induktivität und dem Innenwiderstand der Ankerspule. Diese bildet elektrisch gesehen einen Tiefpass mit der Zeitkonstanten $T_a = L_a/R_i$. Diese Tatsache ist hier als Übertragungsfunktion abgebildet.

Während am Eingang eine Spannung anliegt, erhält man am Ausgang den sich einstellenden Ankerstrom. Dieser Strom multipliziert mit der Motorkonstanten $k_m$ ergibt das antreibende Motormoment. Hiervon muss das Lastmoment und eine geschwindigkeitsproportionale Dämpfung abgezogen werden, wodurch man das tatsächlich antreibende Motormoment mit Berücksichtigung der eingehenden Verluste erhält. Dieses Antriebsmoment multipliziert mit dem Massenträgheitsmoment der Konstruktion wird anschließend integriert, wodurch sich die Drehzahl in der Einheit rad/s ergibt.

Durch Umrechnung gelangt man zur errechneten Drehzahl in Umdrehungen pro Sekunde (U/sec). Integriert man diese Drehzahl noch während der Einschaltdauer des Motors, hat man die Summe aller Umdrehungen innerhalb dieses Zeitraums. Durch Multiplikation dieses Ergebnisses mit der Konstanten $k_m$ (z.B. k=0,02 mm/Umdrehung) ergibt sich schließlich der zurückgelegte Weg.

Wird der Motor abgeschaltet, so wird die Betriebsspannung schlagartig 0. Der Motor dreht jedoch noch weiter. Um diesen Fall zu simulieren, wird zum Abschaltzeitpunkt die zuletzt berechnete, induzierte Ankerspannung als Eingangsspannung dem Modell zugeführt. Diese Spannung läuft dann mit der Zeit gegen 0, womit auch die Drehzahl gegen 0 läuft. Wichtig hierbei ist jedoch auch, dass das Lastmoment in diesem Fall nachgebildet wird, da der gemessene Strom auch mit Abschalten der Spannung schlagartig 0 wird. Hierzu wird das zuletzt ermittelte Lastmoment in einer Speicherzelle gehalten und dem Modell als Lastmoment zugeführt und zwar solang, bis die aus dem Modell berechnete Drehzahl 0 ist. Mit diesen Maßnahmen ist es möglich, das Auslaufen des Motors auch unter schwankenden Lastbedingungen realistisch nachzubilden.

Bei jedem erneuten Einschalten des Motors werden alle Integratoren auf Null gesetzt, damit keine alten Werte einer letzten Ansteuerung das Ergebnis verfälschen.

Erweitert um diesen Sachverhalt kann schließlich ein erweitertes Modell aufgestellt werden.

Um die Spindelposition zu erhalten wird die Drehzahl ω während des Einschaltzeitraums integriert. Multipliziert man das Ergebnis mit einem Faktor k, der sich aus Spindelsteigung und Getriebeübersetzung ergibt, so erhält man den zurückgelegten Weg. Dieser Weg ist gleich der aktuellen Spindelposition. Der Faktor k im Falle der HPB beträgt beispielsweise 0.02 mm pro Motorwellenumdrehung. Somit errechnet sich die

Position x (der Spindelweg) zu:

$$x = k * k_1 * \int \omega(t)dt$$

mit:

$$k_1 = \frac{1}{2\pi}$$ (Umrechnung von rad/sec in Umdrehungen/sec)

$$k = 0{,}02$$ (Getriebeübersetzung, Spindelsteigung)

Ein weiterer Vorteil dieses Verfahrens liegt darin, dass der Algorithmus im 5 msec Raster berechnet werden kann. Die Fehler, die sich bedingt durch die langsame Abtastzeit im Verhältnis zur schnellen Ankerzeitkonstanten einstellen, wirken sich nicht nennenswert auf das Endergebnis aus.

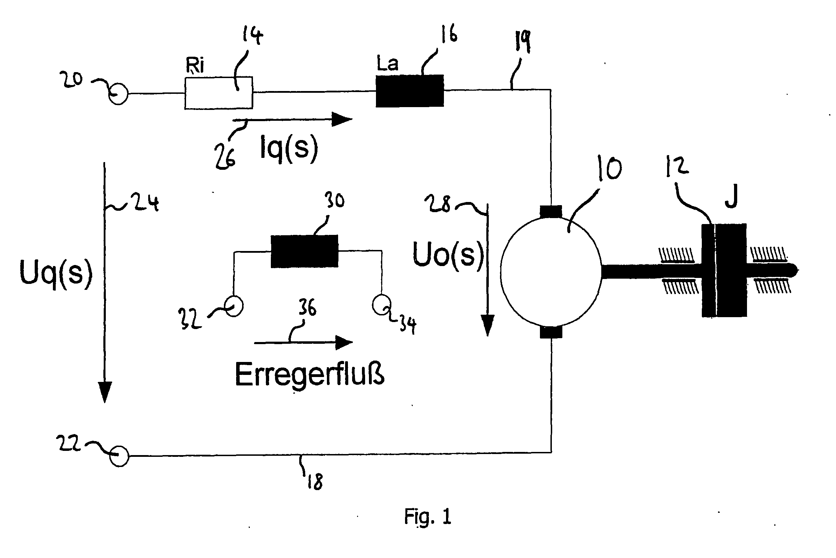

Fig. 1 zeigt ein Ersatzschaltbild für einen Gleichstrommotor 10 mit einer an den Gleichstrommotor angeschlossenen Last 12 mit einem Trägheitsmoment J. An den Gleichstrommotor 10 ist an den Anschlüssen 20, 22 eine Betriebsspannung 24 angelegt, die mit $U_q$ bezeichnet wird. Der Ankerstrom ist mit $I_q$ bezeichnet. Im Ersatzschaltbild steht der Widerstand 14 für den Ankerwiderstand $R_i$ des Gleichstrommotors und die Induktivität 16 für die Ankerspuleninduktivität $L_a$. Die im Motor aufgrund der Drehbewegung erzeugte Induktionsspannung 28 ist mit $U_o$ bezeichnet. Elektrische Leitungen 18, 19 verbinden jeweils den Elektromotor mit den Anschlüssen 20, 22. Der für die Drehbewegung erforderliche magnetische Fluss (Erregerfluss) 36 wird mit einer Statorspule 30 erzeugt, an welche über die Anschlüsse 32, 34 eine Spannung angelegt wird. Alternativ wird der Erregerfluss 36 durch einen Permanentmagneten erzeugt.

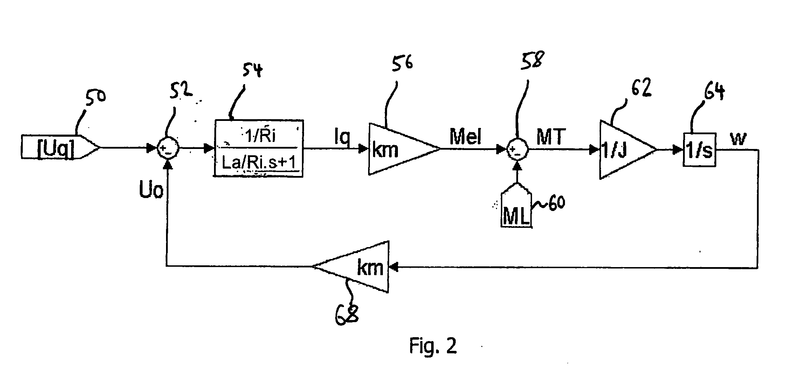

In dem in Fig. 2 gezeigten regelungstechnischen Ersatzschaltbild liegt die Betriebsspannung 50 (wieder mit $U_q$ als Symbol bezeichnet; entspricht dem Bezugszeichen 24 in Fig. 1) an. In einem Addierer 52 werden die Betriebsspannung $U_q$ und die Induktionsspannung $U_o$ addiert. Mit Hilfe von Gl. 1.3 wird im Rechenschritt 54 der Ankerstrom $I_q$ berechnet. Aus dem Ankerstrom $I_q$ und der Motorkonstante $k_m$ wird im Rechenschritt 56 das erzeugte elektrische Antriebsmoment $M_{ei}$ berechnet. Durch Addition 58 des Antriebsmoment $M_{ei}$ mit dem Lastmoment $M_L$ wird das zur Beschleunigung oder Verzögerung notwendige Beschleunigungsmoment $M_T$ berechnet. Durch Division 62 durch das Trägheitsmoment J und durch anschliessende Division 64 durch die Lapace-Variable s wird die Winkelgeschwindigkeit $\omega$ berechnet. Durch Multiplikation 68 mit der Motorkonstanten $k_m$ wird die Induktionsspannung $U_o$ berechnet, die in einem Rückkopplungspfad dem Addierer 52 zugeführt wird.

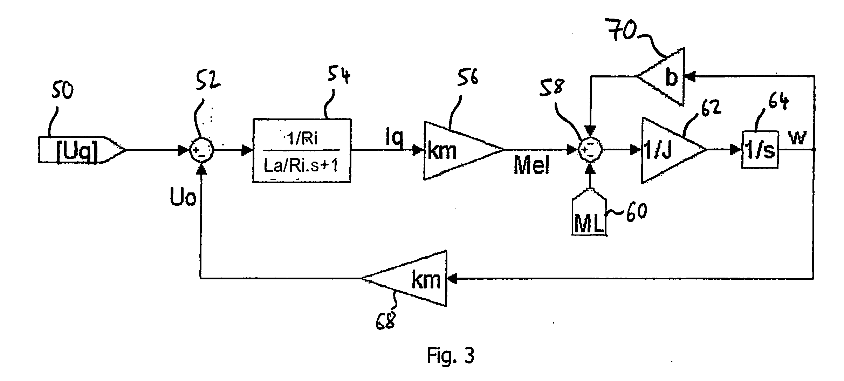

Das Ersatzschaltbild aus Fig. 3 entspricht im Wesentlichen dem Ersatzschaltbild aus Fig. 2, verfügt aber zusätzlich über einen Kreis mit einer erfindungsgemäßen geschwindigkeitsproportionalen Dämpfung. In einem zusätzlichen Schritt 70 wird nach der Berechnung von $\omega$ im Rechenschritt 64 aus der Winkelgeschwindigkeit w durch Multiplikation mit einer Dämpfungskonstanten b ein Dämpfungsmoment $M_d$ berechnet, welches dem Addierer 58 zugeführt wird. Somit setzt der Addierer 58 die Gl. 1.10 um.

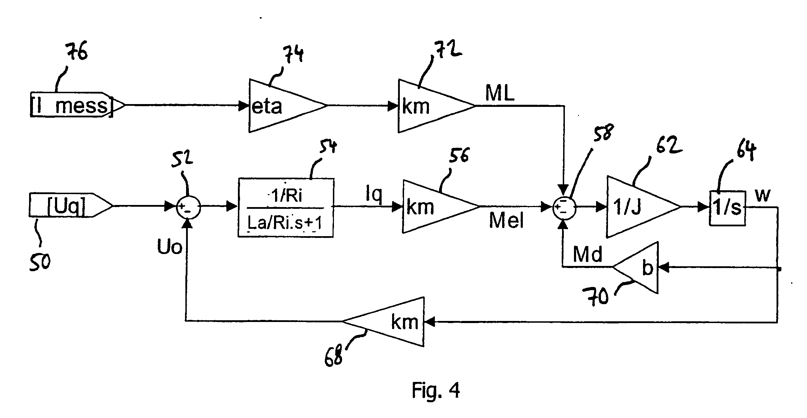

Das Ersatzschaltbild aus Fig. 4 entspricht im Wesentlichen dem Ersatzschaltbild aus Fig. 3, umfasst aber zusätzlich einen Kreis zur Berechnung des Lastmoments $M_L$. Durch Multiplikation 74 des gemessenen Motorstroms 76 mit einem Wirkungsgrad η (in Fig. 4 mit eta bezeichnet) wird und nachfolgender Multiplikation 72 mit der Motorkonstanten $k_m$ wird das Lastmoment $M_L$ berechnet. Diesem wird dem Addierer 58 zugeführt.

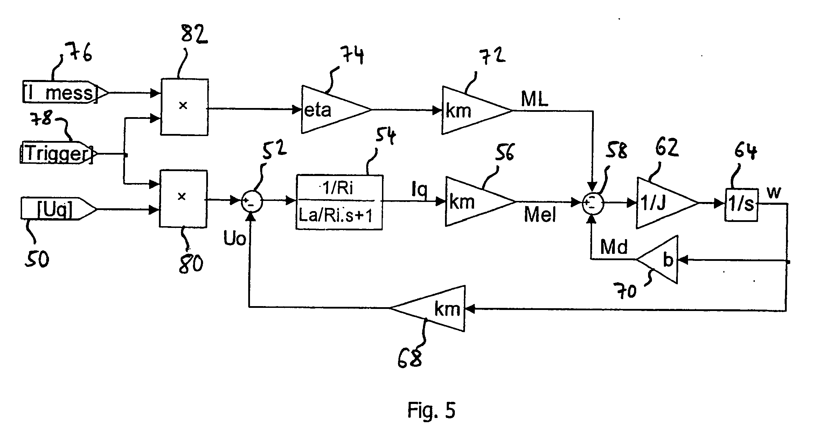

Das Ersatzschaltbild aus Fig. 5 entspricht im Wesentlichen dem Ersatzschaltbild aus Fig. 4, umfasst aber zusätzlich einen Triggerschaltkreis zum Ein- und Ausschalten des Regelungskreises. Über das Triggersignal 78 werden die Schalter 80, 82 angesteuert. Ist das Triggersignal 78 ausgeschaltet, sind die Klemmspannung $U_q$ und der gemessene Motorstrom auf Null gesetzt. Ist das Triggersignal 78 eingeschaltet, werden die Klemmspannung $U_q$ und der gemessene Motorstrom $I_{mess}$ auf das Modell geschaltet.

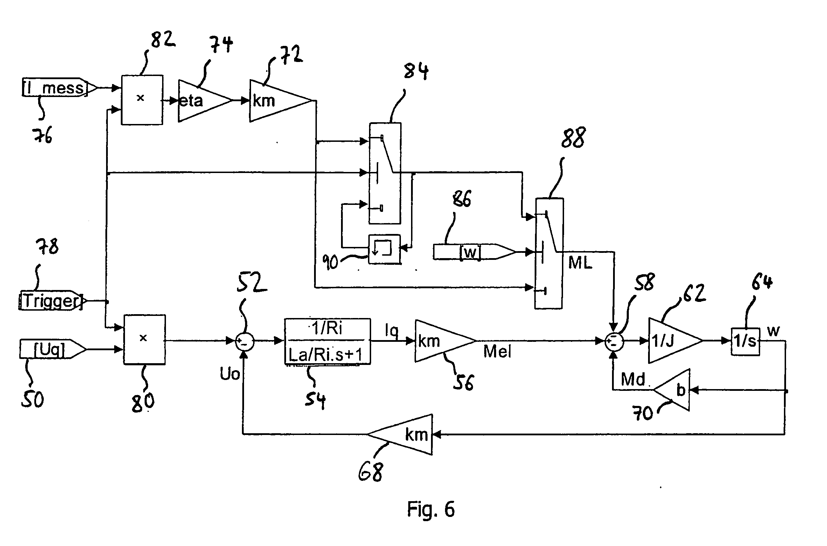

Das in Fig. 6 gezeigte Ersatzschaltbild unterscheidet sich vom Ersatzschaltbild der Fig. 5 darin, dass zwischen dem Multiplikationsschritt 72 und dem Addierer 58 ein Kreis zur Schätzung des Lastmoments zum Abschaltzeitpunkt des Motors vorgesehen ist. Ist das Triggersignal 78 eingeschaltet, leitet eine erste Schalteinheit 84 den derzeitigen Wert des Lastmoments $M_L$ an eine zweite Schalteinheit 88 weiter. Ist das Triggersignal 78 ausgeschaltet, wird der momentane Wert des Lastmoments $M_L$ zum Ausschaltzeitpunkt des Triggersignals 78 in einer Speicherzelle 90 gespeichert und der zweiten Schalteinheit 88 weiter zugeführt. Die zweite Schalteinheit 88 leitet den Wert des Lastmoments $M_L$ dem Addierer 58 solange weiter, bis die simulierte Winkelgeschwindigkeit $\omega$ Null wird. Somit gibt die zweite Schalteinheit 88 nur dann den Wert des Lastmoments $M_L$ an den Addierer weiter, wenn der Motor in Bewegung ist. Beim Einschalten des Motors wird das Triggersignal 78 wieder eingeschaltet, so dass der aktuelle Wert des Lastmoments über die erste Schalteinheit 84 und die zweite Schalteinheit 88 über den Addierer 58 in das Modell eingeht.

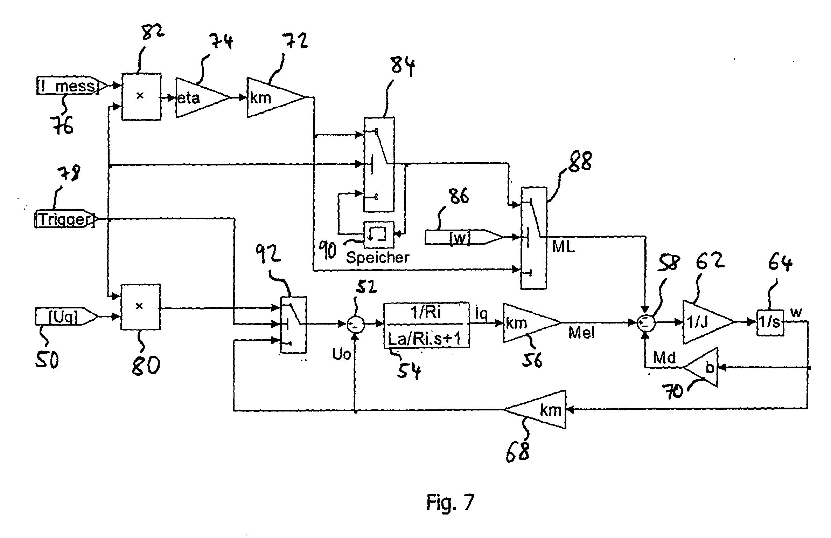

In dem in Fig. 7 gezeigten Ersatzschaltbild werden zusätzlich die Spannungsverhältnisse am Motor beim Abschalten berücksichtigt. Um das Auslaufverhalten des Motors richtig abzubilden, wird zum Abschaltzeitpunkt die induzierte Spannung als speisende Spannung $U_q$ dem Modell zugeführt. Ist das Triggersignal 78 eingeschaltet, führt eine dritte Schalteinheit 92 dem Addierer 52 die Klemmspannung $U_q$ zu. Sobald das Triggersignal 78 ausgeschaltet ist, führt die dritte Schalteinheit 92 dem Addierer 52 die induzierte Spannung $U_o$ als Klemmspannung $U_q$ zu. Daher ist $U_q - U_o = 0$. Somit ist nur noch der mechanische Anteil des Modells wirksam.

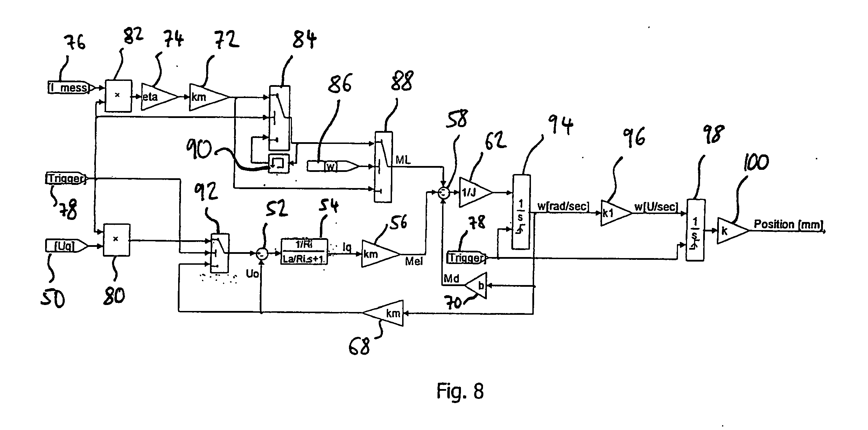

Das Ersatzschaltbild in Fig. 8 entspricht im Wesentlichen dem Ersatzschaltbild aus Fig. 7, wobei zusätzlich durch Multiplikation 96 im Block k1 die Winkelgeschwindigkeit in Umdrehungen pro Sekunde umgerechnet wird. Über die Schritte 98 und 100 wird die Position der Stelleinheit berechnet. Dabei wird der Integrator 98, 100 zur Berechnung von Drehzahl und Weg zu Beginn der Berechnung zurückgesetzt, damit alte Ergebnisse keine Fehlberechnung hervorrufen. In einem Ausführungsbeispiel erfolgt das Rücksetzen mit jeder steigenden Flanke des Triggersignals 78. Vorteilhafterweise arbeitet das Modell mit kurzen Rechenzeiten, bevorzugt im µs- oder ms-Bereich. In einem Ausführungsbeispiel arbeitet das Modell mit Rechenzeiten von 5ms. Die Fehler, die sich bedingt durch die langsame Abtastzeit im Verhältnis zur schnellen Ankerzeitkonstanten einstellen, wirken sich nicht nennenswert auf das Endergebnis aus.

Der Aufwand zur Umsetzung eines Programmcodes für einen Mikrocontroller ist gering. Eine Portierung auf einen handelsübliche Microcontroller z.B. Siemens C167 ist im Integerformat direkt möglich.

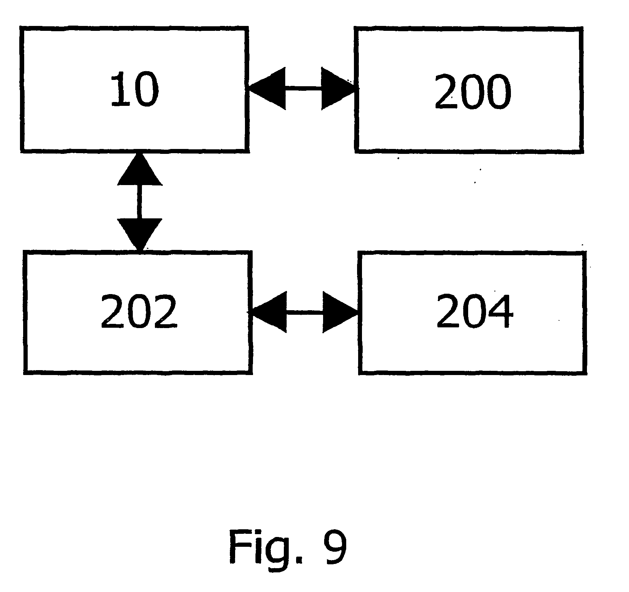

Fig. 9 ist eine schematische Darstellung einer erfindungsgemäßen Stellvorrichtung mit einem Elektromotor 10, einer Stelleinheit 200, einer Speichereinheit 204 und einem Prozessor 202. Der Elektromotor 10 treibt die Stelleinheit 200 an. Der Prozessor 202 führt das erfindungsgemäße Verfahren zum Ermitteln der Position der von dem Elektromotor 10 betriebenen Stelleinheit 200 durch. Der Programmcode sowie die Messdaten werden in der Speichereinheit 204 gespeichert. Der Prozessor kommuniziert mit dem Elektromotor 10. Alle zum Ermitteln der Position der von dem Elektromotor 10 betriebenen Stelleinheit 200 benötigten Daten werden dem Prozessor 202 zugeleitet.

**Patentansprüche**

1. Verfahren zum Ermitteln einer Position einer von einem Elektromotor betriebenen Stelleinheit, umfassend die Schritte:

   Bestimmen einer Motordrehzahl aus einem Motormodell,
   Integration der Motordrehzahl über einen Zeitraum; und
   Ermitteln der Position der Stelleinheit durch Multiplikation des Ergebnisses der Integration mit einem Proportionalitätsfaktor;
   wobei das Motormodell ein Nachlaufen des Elektromotors berücksichtigt, indem zum Abschaltzeitpunkt des Elektromotors die im Elektromotor induzierte Spannung als speisende Spannung dem Motormodell wird.

2. Verfahren gemäß Anspruch 1, wobei das Motormodell zum Abschaltzeitpunkt ein auf den Elektromotor wirkendes belastendes Moment berücksichtigt.

3. Verfahren gemäß einem der vorhergehenden Ansprüche, wobei das Motormodell zusätzlich eine zur Drehgeschwindigkeit proportionale Dämpfung berücksichtigt.

4. Verfahren gemäß Anspruch 3, **dadurch gekennzeichnet, dass** die geschwindigkeitsproportionale Dämpfung als ein Dämpfungsdrehmoment in das Motormodell aufgenommen wird, wobei das Dämpfungsdrehmoment gleich einer Dämpfungskonstante multipliziert mit einer Winkelgeschwindigkeit des Elektromotors ist.

5. Verfahren gemäß Anspruch 4, **dadurch gekennzeichnet, dass** die Dämpfungskonstante gleich einem Leerlaufreibmoment dividiert durch eine Leerlaufwinkelgeschwindigkeit des Motors ist.

6. Verfahren gemäß Anspruch 5, **dadurch gekennzeichnet, dass** das Motormoment aus einem gemessenen Motorstrom bestimmt wird, wobei ein Wirkungsgrad eines elektrischen Teils des Elektromotors berücksichtigt wird.

7. Verfahren gemäß einem der vorhergehenden Ansprüche, **dadurch gekennzeichnet, dass** das Verfahren zusätzlich den Schritt des Einschaltens eines Triggersignals als ersten Schritt umfasst und dass nur dann der Schritt des Bestimmens der Motordrehzahl ausgeführt wird, wenn das Triggersignal eingeschaltet ist.

8. Verfahren gemäß einem der vorhergehenden Ansprüche, **dadurch gekennzeichnet, dass** das Verfahren zusätzlich den Schritt des Ausschaltens des Triggersignals als letzten Schritt umfasst, beim Ausschalten des Triggersignals das belastende Moment bestimmt wird und dem Modell zugeführt wird, solange die vom Modell berechnete Drehzahl größer Null ist und das belastende Moment den Wert Null annimmt, wenn die berechnete Drehzahl Null ist.

9. Verfahren gemäß Anspruch 8, **dadurch gekennzeichnet, dass** beim Ausschalten des Triggersignals dem Modell die induzierte Spannung als speisende Spannung zugeführt wird.

10. Verfahren gemäß einem der Ansprüche 7 bis 9, **dadurch gekennzeichnet, dass** ein Integrator zur Berechnung von Drehzahl und Weg zu Beginn der Berechnung bei jeder steigenden Flanke des Triggersignals zurückgesetzt wird.

11. Verfahren gemäß einem der vorhergehenden Ansprüche, **dadurch gekennzeichnet, dass** das Verfahren zusätzlich den Schritt des Umrechnens der Drehzahl in Umdrehungen pro Sekunde umfasst.

12. Computerprogrammprodukt, das Programmcode für die Durchführung der folgenden Schritte zum Ermitteln der Position einer von einem Elektromotor betriebenen Stelleinheit umfasst:

    Bestimmen einer Motordrehzahl aus einem Motormodell und
    Bestimmen des von der Stelleinheit zurückgelegten Wegs durch Integration der Motordrehzahl über einen Zeitraum und Multiplikation mit einem Proportionalitätsfaktor,
    wobei das Motormodell ein Nachlaufen des Elektromotors berücksichtigt, indem zum Abschaltzeitpunkt des Elektromotors die im Elektromotor induzierte Spannung als speisende Spannung dem Motormodell zugeführt wird.

13. Stellvorrichtung, umfassend:

- einen Elektromotor (10),
- eine von dem Elektromotor (10) betriebene Stelleinheit (200),
- eine Speichereinheit (204),
- einen Prozessor (202),
wobei die Speichereinheit Programmcode zum Durchführen der folgenden Schritte zum Ermitteln der Position der von einem Elektromotor betriebenen Stelleinheit umfasst:

Bestimmen einer Motordrehzahl aus einem Motormodell,
Bestimmen eines von der Stelleinheit zurückgelegten Wegs durch Integration der Motordrehzahl über einen Zeitraum und Multiplikation mit einem Proportionalitätsfaktor,
und wobei das Motormodell ein Nachlaufen des Elektromotors berücksichtigt, indem zum Abschaltzeitpunkt des Elektromotors (10) die im Elektromotor (10) induzierte Spannung als speisende Spannung dem Motormodell zugeführt wird.

14. Bremse, umfassend eine Stellvorrichtung gemäß Anspruch 13, welche die Bremse betätigt.

15. Pumpenvorrichtung, umfassend eine Stellvorrichtung gemäß Anspruch 13, welche die Pumpenvorrichtung betätigt.

16. Getriebe, umfassend eine Stellvorrichtung gemäß Anspruch 13, welche das Getriebe betätigt.

**Claims**

1. A method for determining a position of an actuating unit which is operated by an electric motor, comprising the steps:

determining a motor speed from a motor model;
integrating the motor speed over a period of time; and
determining the position of the actuating unit by multiplying the result of integration by a proportionality factor;
wherein the motor model takes account of an afterrunning of the electric motor by delivering the voltage induced in the electric motor as a supply voltage to the motor model at the instant of switch-off of the electric motor.

2. The method according to claim 1, wherein at the instant of switch-off the motor model takes account of a loading torque acting on the electric motor.

3. The method according to any one of the preceding claims, wherein the motor model additionally takes account of damping proportional to the rotational speed.

4. The method according to claim 3, **characterized in that** the damping proportional to the speed is included in the motor model as a damping torque, wherein the damping torque is equal to a damping constant multiplied by an angular speed of the electric motor.

5. The method according to claim 4, **characterized in that** the damping constant is equal to a no-load friction torque divided by a no-load angular speed of the motor.

6. The method according to claim 5, **characterized in that** the motor torque is determined from a measured motor current, wherein an efficiency factor of an electrical part of the electric motor is taken into account.

7. The method according to any one of the preceding claims, **characterized in that** the method additionally comprises the step of switching on a trigger signal as the first step and that the step of determining the motor speed is only executed when the trigger signal is switched on.

8. The method according to any one of the preceding claims, **characterized in that** the method additionally comprises the step of switching off the trigger signal as the last step, the loading torque being determined and delivered to the model when the trigger signal is switched off as long as the rotational speed calculated by the model is greater than zero and the loading torque assumes the value zero when the calculated rotational speed is zero.

9. The method according to claim 8, **characterized in that** the induced voltage is delivered as a supply voltage to the model when the trigger signal is switched off.

10. The method according to any one of claims 7 to 9, **characterized in that** an integrator for calculating the rotational speed and distance is reset at the beginning of the calculation at each rising edge of the trigger signal.

11. The method according to any one of the preceding claims, **characterized in that** the method additionally comprises the step of converting the rotational speed into revolutions per second.

12. A computer program product that comprises program code for executing the following steps for determining a position of an actuating unit operated by an electric motor:

    determining a motor speed from a motor model;
    determining a distance covered by the actuating unit by integrating the motor speed over a period of time and multiplying it by a proportionality factor,
    wherein the motor model takes account of an afterrunning of the electric motor by delivering the voltage induced in the electric motor as a supply voltage to the motor model at the instant of switch-off of the electric motor.

13. An actuating device, comprising:

    - an electric motor (10),
    - an actuating unit (200) operated by the electric motor (10),
    - a storage unit (204),
    - a processor (202),
    wherein the storage unit (204) comprises program code for executing the following steps for determining a position of the actuating unit operated by an electric motor:

       determining a motor speed from a motor model;
       determining a distance covered by the actuating unit by integrating the motor speed over a period of time and multiplying it by a proportionality factor,
       wherein the motor model takes account of an afterrunning of the electric motor (10) by delivering the voltage induced in the electric motor (10) as a supply voltage to the motor model at the instant of switch-off of the electric motor (10).

14. A brake, comprising an actuating device according to claim 13 that applies the brake.

15. A pumping device, comprising an actuating device according to claim 13 that actuates the pumping device.

16. A gear unit, comprising an actuating system according to claim 13 that actuates the gear unit.


**Revendications**

1. Procédé pour déterminer une position d'une unité de positionnement commandée par un moteur électrique, comprenant les étapes suivantes :

    détermination d'un régime moteur à partir d'un modèle de moteur ;
    intégration du régime moteur durant un laps de temps ; et
    détermination d'une position de l'unité de positionnement par multiplication du résultat de l'intégration par un facteur de proportionnalité ;
    le modèle de moteur tenant compte d'un mouvement rémanent du moteur électrique en ce sens qu'à la coupure du moteur électrique, la tension induite dans le moteur électrique est amenée sous forme de tension d'alimentation au modèle de moteur.

2. Procédé selon la revendication 1, dans le cadre duquel le modèle de moteur tient compte d'un couple de charge agissant sur le moteur électrique à la coupure du moteur.

**3.** Procédé selon l'une des revendications précédentes, dans le cadre duquel le modèle de moteur tient en outre compte d'un amortissement proportionnel au régime du moteur.

**4.** Procédé selon la revendication 3, **caractérisé en ce que** l'amortissement proportionnel au régime est introduit comme couple d'amortissement dans le modèle de moteur et que le couple d'amortissement est égal à une constante d'amortissement multipliée par une vitesse angulaire du moteur électrique.

**5.** Procédé selon la revendication 4, **caractérisé en ce que** la constante d'amortissement est égale à un couple de friction sous marche à vide divisé par une vitesse angulaire sous marche à vide du moteur.

**6.** Procédé selon la revendication 5, **caractérisé en ce que** le couple moteur est déterminé à partir d'un courant moteur mesuré, un degré d'efficacité d'une pièce électrique du moteur électrique étant pris en compte.

**7.** Procédé selon l'une des revendications précédentes, **caractérisé en ce que** le procédé comporte en outre, comme première étape, l'étape consistant en l'activation d'un signal de déclenchement, et **en ce que** l'étape consistant en la détermination du régime moteur est réalisée uniquement si le signal de déclenchement est activé.

**8.** Procédé selon l'une des revendications précédentes, **caractérisé en ce que** le procédé comporte en outre, comme dernière étape, l'étape consistant en la coupure du signal de déclenchement, et **en ce qu'** à la coupure du signal de déclenchement, le couple de charge est déterminé et amené au modèle tant que le régime calculé par le modèle est supérieur à zéro et que le couple de charge prend la valeur zéro lorsque le régime calculé est égal à zéro.

**9.** Procédé selon la revendication 8, **caractérisé en ce qu'**à la coupure du signal de déclenchement, la tension induite est amenée au modèle sous forme de tension d'alimentation.

**10.** Procédé selon l'une des revendications 7 à 9, **caractérisé en ce que**, pour le calcul du régime et le calcul de la distance, un intégrateur est réinitialisé en début de calcul, pour chaque flanc ascendant du signal de déclenchement.

**11.** Procédé selon l'une des revendications précédentes, **caractérisé en ce que** le procédé comporte en outre l'étape consistant en la conversion du régime en tours par seconde.

**12.** Produit de programme informatique comprenant un code de programme pour la réalisation des étapes suivantes en vue de la détermination de la position d'une unité de positionnement commandée par un moteur électrique :

détermination d'un régime moteur à partir d'un modèle de moteur et
détermination de la distance parcourue par l'unité de positionnement par intégration du régime du moteur durant un laps de temps et par multiplication par un facteur de proportionnalité, le modèle de moteur tenant compte d'un mouvement rémanent du moteur électrique en ce sens qu'à la coupure du moteur électrique, la tension induite dans le moteur électrique est amenée sous forme de tension d'alimentation au modèle de moteur.

**13.** Dispositif de positionnement, comprenant :

- un moteur électrique (10),
- une unité de positionnement (200) commandée par le moteur électrique (10),
- une unité de mémorisation (204),
- un processeur (202),
l'unité de mémorisation comprenant un code de programme pour la réalisation des étapes suivantes en vue de la détermination de la position de l'unité de positionnement commandée par un moteur électrique :

détermination d'un régime moteur à partir d'un modèle de moteur,
détermination de la distance parcourue par l'unité de positionnement par intégration du régime du moteur durant un laps de temps et par multiplication par un facteur de proportionnalité,
et le modèle de moteur tenant compte d'un mouvement rémanent du moteur électrique en ce sens qu'à la coupure du moteur électrique (10), la tension induite dans le moteur électrique (10) est amenée sous forme de tension d'alimentation au modèle de moteur.

**14.** Frein, comprenant un dispositif de positionnement selon la revendication 13, lequel actionne le frein.

**15.** Dispositif de pompe, comprenant un dispositif de positionnement selon la revendication 13, lequel actionne le dispositif de pompe.

**16.** Transmission, comprenant un dispositif de positionnement selon la revendication 13, lequel actionne la transmission.

Fig. 1

Fig. 2

Fig. 3

Fig. 4

Fig. 5

Fig. 6

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19729238 C1
- DE 10028035 A1
- US 5783917 A
- JP 2003209989 A